Europäisches Patentamt

European Patent Office

Office européen des brevets

(11) Publication number : **0 171 906 B1**

# EUROPEAN PATENT SPECIFICATION

(45) Date of publication of patent specification : 02.12.87

(51) Int. Cl.⁴ : **B 60 R   1/06**

(21) Application number : 85304729.8

(22) Date of filing : 02.07.85

(54) Exterior rearview mirrors for vehicles.

(30) Priority : 10.07.84 GB 8417606

(43) Date of publication of application : 19.02.86 Bulletin 86/08

(45) Publication of the grant of the patent : 02.12.87 Bulletin 87/49

(84) Designated contracting states : DE FR GB IT

(56) References cited :
DE-A- 3 008 031
DE-A- 3 248 759
FR-A- 2 477 081

(73) Proprietor : B.S.G. Overseas Limited
Burgess House 1270 Coventry Road
Birmingham B25 8BB (GB)

(72) Inventor : Desforges, Patrick Jean James
65 rue du Docteur Siffre
F-77930 Perthes-en-Gatenais (FR)
Inventor : Harry, Jean-Michel
68 avenue de la Foset
F-77210 Avon (FR)
Inventor : Cluet, Yves
46 rue de la Republique
F-77210 Avon (FR)

(74) Representative : Hollinghurst, Antony
Britax Limited Patent Department Kingsham Road
Chichester West Sussex PO19 2UG (GB)

## Description

This invention relates to exterior rearview mirrors for vehicles and has particular application to the provision of an exterior rearview mirror having a plurality of pre-selectable preferred orientations relative to the vehicle body as specified in the preamble of claim 1, for example as disclosed in FR-A-2 477 081.

Because of the asymmetrical position of the driver's head relative to the longitudinal centre line of a motor car, driver's side mirrors have to be at a different orientation to passenger's side mirrors. Consequently, when designing an exterior mirror for a motor vehicle, it is necessary to make provision for up to four conditions of use, namely right-hand drive — driver's side, right-hand drive — passenger's side, left-hand drive — driver's side and left-hand drive — passenger's side (FR-A-2 477 081).

To solve this problem and according to the invention, an exterior rearview mirror having a plurality of pre-selectable preferred orientations relative to the vehicle body comprises a bracket adapted to be secured to the vehicle body, a mirror housing pivotally mounted on the bracket for relative angular movement about a vertical axis, an intermediate member adapted to be mounted on one of the housing and the bracket in either of two alternative orientations, a first detent formation on the intermediate member, a complementary second detent formation on the other of the housing and the bracket, and resilient means for urging the first and second detent formations into mutual engagement ; the angle between the housing and the bracket when the detent formations are in full mutual engagement having one value when the intermediate member is mounted in one orientation and having a different value when the intermediate member is mounted in the other orientation.

According to a preferred form of the invention, the second detent formation is formed on a second intermediate member adapted to be selectively mountable on the other one of the housing and the bracket in either of two alternative orientations so that the angle between the housing and the bracket when the detent formations are in full engagement has a first value when the second intermediate member is in one orientation and a second value when the second intermediate member is in its other orientation.

The difference in angle between the housing and the bracket provided by changing the orientation of one of the intermediate members is preferably arranged to be equal to the change of angle required between a mirror which is to be mounted on the right-hand side of the vehicle and a mirror which is to be mounted on the left-hand side of the vehicle. The difference in angle provided by changing the orientation of the other intermediate member may be arranged to be equal to the change of angle between the orientation required for a mirror to be mounted on the driver's side of the vehicle and the change of orientation required for a mirror to be mounted on the passenger's side of the vehicle.

If it is desired to provide for remote adjustment of the orientation of the mirror by changing the orientation of the housing relative to the bracket, the first intermediate member may be mounted on the bracket in such a manner as to be adjustable by control means operable from inside the vehicle. On the other hand, if such adjustment is not required or if such adjustment is to be provided by varying the orientation of the mirror reflector within the housing, the first intermediate member is rigidly secured to the bracket.

An embodiment of the invention will now be described, by way of example, with reference to the accompanying drawings in which :

Figure 1 is a vertical cross-sectional view of an exterior mirror in accordance with the invention ;

Figure 2 is a cross-sectional view taken on the line 2-2 in Figure 1 and showing the section line 1-1 on which the cross-section of Figure 1 is taken ; and

Figure 3 is a fragmentary cross-sectional view, similar to Figure 1, illustrating a modification.

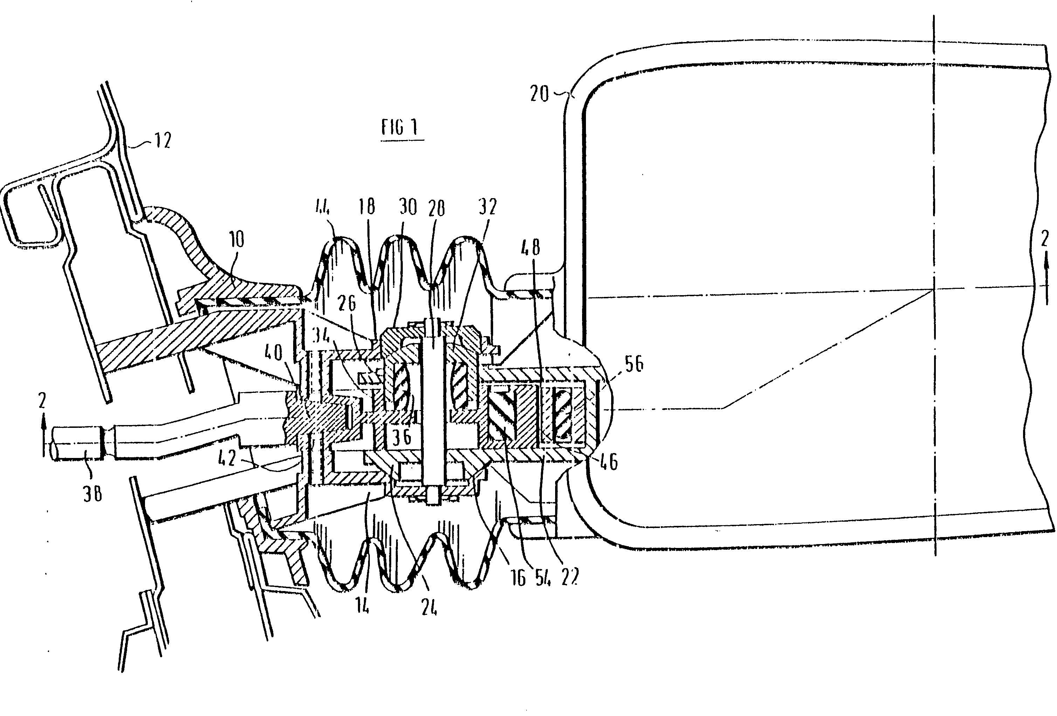

As illustrated in Figures 1 and 2, a rearview mirror has a bracket 10 mounted on the body 12 of a vehicle. The bracket 10 has a projecting portion 14 which carries a part-spherical lower socket 16 and a cylindrical upper socket 18. A mirror housing 20 has a projecting portion 22 with a lower part-spherical convex portion 24 which engages in the socket 16 and an upper cylindrical socket portion 26 which is axially aligned with the corresponding cylindrical portion 18 on the bracket 10.

In order to retain the two part-spherical portions 16 and 24 in engagement with one another, a central pin 28 is secured at one end in the centre of the concave surface 16 and has a cap 30 secured to its other end, the cap 30 being a sliding fit in the cylindrical socket 18 on the bracket 10. The cap 30 has a downwardly facing concave surface which engages with an intermediate cap 32 having a convex upper surface. A first intermediate member 34, which will be described in more detail hereinafter, abuts against the upper surface of the projecting portion 22 of the housing 20. A resilient member 36 of elastomeric material engages between the intermediate member 34 and the cap 32 so as to urge the various part-spherical surfaces into mutual engagement.

The cap 32 and the projecting portion 22 have respective holes for accommodating the pin 28 which are elongate in the direction perpendicular to the plane of the drawing in Figure 1. The corresponding hole in the intermediate member 34 is of greater diameter than the pin 28, as illustrated. Thus, the mirror housing 20 is capable of limited angular movement about a horizontal axis perpendicular to that of the pin 28 as well as being pivotable about the axis of the pin 28. In order to effect such movement, a handle 38, which projects into the interior of the vehicle, has a frustoconical outer end portion 40 which is received in a complementary socket 42 in the intermediate member 34. A flexible gaiter 44 extends between the bracket 10 and the housing 20 so as to protect the various components from the weather.

In accordance with the invention, the intermediate member 34 carries a detent projection 46 which engages in a complementary groove 48 in a second intermediate member 50 which is secured to the housing 20 by snap-engagement formations 52. The two intermediate members 34 and 50 are made of resilient plastics material and have voids in alignment with the detent formations 46 and 48, each void containing a respective insert 54, 56 of elastomeric material. If the housing 20 is subject to impact, the detent projection 46 disengages from the groove 48, allowing the housing 20 to pivot about the pin 28 so as to lie parallel to the adjacent part of the vehicle body.

As can best be seen from Figure 2, the surface of the intermediate member 34 carrying the detent formation 46 is at an angle to the surface from which the lever 38 projects. As can best be seen from Figure 1, the intermediate member 34 is symmetrical about its horizontal centre line and consequently, if it is inverted, the angle between the mirror housing 10 and the bracket 20 will be the complementary angle necessary for mounting the mirror on the other side of the vehicle.

Similarly, the groove 48 is positioned to one side of the vertical centre line of the second intermediate member 50 which is also symmetrical about its horizontal centre line. Consequently, if the latter is clipped on to the housing 20 in an inverted orientation relative to that illustrated, the angle between the housing 20 and the bracket 10 will be changed by the relatively small amount necessary to compensate for the difference in the required angle of a driver's side mirror and a passenger's side mirror.

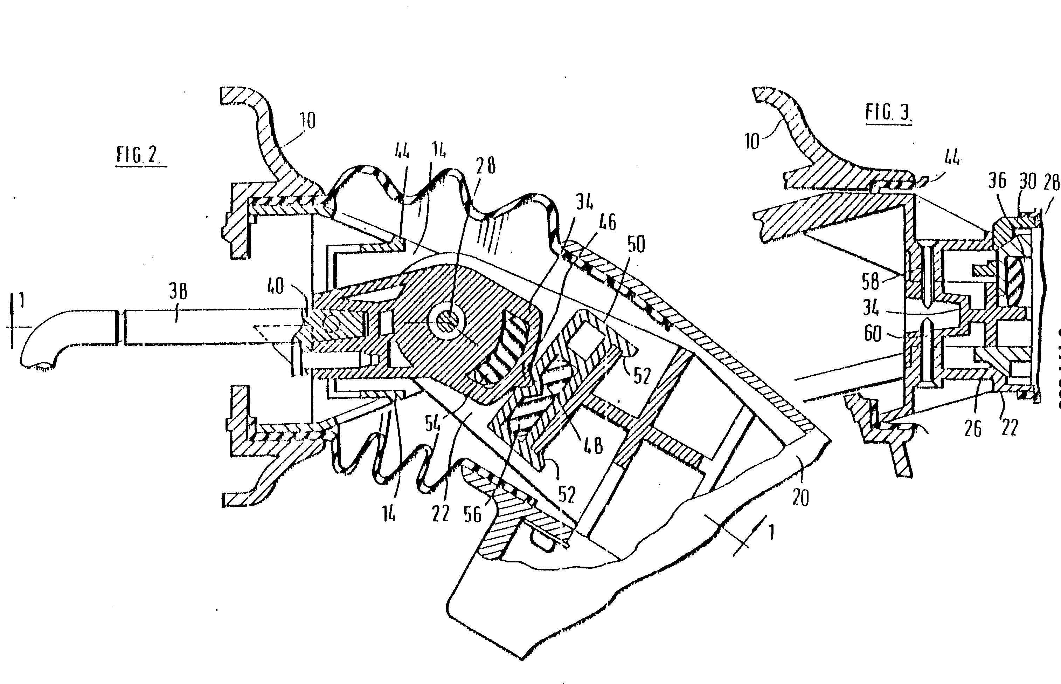

The orientation of some types of exterior rearview mirrors is effected by varying the orientation of the reflective surface of the mirror relative to its housing, using an electrically powered drive, using a drive employing three Bowden cables, or by direct (non-remote) pressure of the user's fingers on the reflective surface. The latter then merely needs to be capable of pivoting to a position parallel to the vehicle body in the event of impact. Turning now to Figure 3, if the invention is to be used with mirrors of any of these types, the handle 38 is omitted and the first intermediate member 34 is rigidly secured to the bracket 10 by means of pins 58 and 60.

## Claims

1. An exterior rearview mirror having a plurality of pre-selectable preferred orientations relative to the vehicle body comprising a bracket (10) adapted to be secured to a vehicle body (12), and a mirror housing (20) pivotally mounted on the bracket (10) for relative angular movement about a vertical axis (28), characterised by an intermediate member (34) adapted to be mounted on one of the housing (20) and the bracket (10) in either of two alternative orientations, a first detent formation (46) on the intermediate member (34), a complementary second detent formation (48) on the other of the housing (20) and the bracket (10), and resilient means (54, 56) for urging the first and second detent formations (46, 48) into mutual engagement ; the angle between the housing (20) and the bracket (10) when the detent formations (46, 48) are in full mutual engagement having one value when the intermediate member (34) is mounted in one orientation and having a different value when the intermediate member (34) is mounted in the other orientation.

2. A rear view mirror according to claim 1, characterized in that the second detent formation (48) is formed on a supplementary intermediate member (50) adapted to be selectively mountable on the other one of the housing (20) and the bracket (10) in either of two alternative orientations so that the angle between the housing (20) and the bracket (10) when the detent formations (46, 48) are in full engagement has a first value when the supplementary intermediate member (50) is in one orientation and a second value when the supplementary intermediate member (50) is in its other orientation.

3. A rear view mirror according to claim 1 or 2, characterized in that the intermediate member (34) is mounted on the bracket (10) in such a manner as to be adjustable by control means (38) operable from inside the vehicle.

4. A rear view mirror according to claim 1 or 2, characterized in that the intermediate member (34) is rigidly secured to the bracket (10).

## Patentansprüche

1. Außenrückspiegel mit mehreren vorwählbaren Vorzugs-Orientierungen in Bezug auf die Fahrzeugkarosserie, umfaßend einen Träger (10), der an einer Fahrzeugkarosserie (12) befestigbar ist, und ein Spiegelgehäuse (20), das schwenkbar an den Träger (10) für eine Relativ-Winkelbewegung um eine vertikale Achse (28) montiert ist, gekennzeichnet durch ein Zwischenteil (34), das an dem Gehäuse (20) oder an dem Träger (10) in einer von zwei alternativen Orientierungen montierbar ist, eine erste Zahnausbildung (47) an dem Zwischenteil (34), eine komplementäre zweite Zahnausbildung (48) an dem Träger bzw. dem Gehäuse, und elastische Mittel (54, 56), die die erste und die zweite Zahnausbildung (46, 48) in gegenseitigen Eingriff drängen ; wobei der Winkel zwischen dem Gehäuse (20) und dem Träger (10) bei vollständigem Eingriff der Zahnausbildungen (46, 48) dann, wenn das Zwischenteil (34) in der einen Orientierung montiert ist, einen gegebenen Wert aufweist und einen anderen Wert aufweist, wenn das Zwischenteil (34) in der anderen Orientierung montiert ist.

2. Rückspiegel nach Anspruch 1, dadurch gekennzeichnet, daß die zweite Zahnausbildung (48) an einem Zusatz-Zwischenteil (50) ausgebildet ist, das selektiv an dem Träger (10) bzw. an dem Gehäuse (20) in einer von zwei Orientierungen montierbar ist, so daß der Winkel zwischen dem Gehäuse (20) und dem Träger (10) bei vollem Eingriff der Zahnausbildungen (46, 48) einen ersten Wert hat, wenn das Zusatz-Zwischenteil (50) die eine Orientierung einnimmt, und einen zweiten Wert hat, wenn das Zusatz-Zwischenteil (50) die andere Orientierung aufweist.

3. Rückspiegel nach Anspruch 1 oder 2, dadurch gekennzeichnet, daß das Zwischenteil (34) an dem Träger (10) derart montiert ist, daß es durch von der Innenseite des Fahrzeugs her bedienbare Steuermittel (38) justierbar ist.

4. Rückspiegel nach Anspruch 1 oder 2, dadurch gekennzeichnet, daß das Zwischenteil (34) starr an dem Träger (10) befestigt ist.

**Revendications**

1. Un rétroviseur extérieur ayant une pluralité d'orientations préférées pouvant être présélectionnées par rapport à la carrosserie du véhicule comprenant une console (10) adaptée pour être fixée à une carrosserie de véhicule (12), et un boîtier de rétroviseur (20) monté à pivotement sur la console (10) en vue d'effectuer un mouvement angulaire relatif autour d'un axe vertical (28), caractérisé en ce qu'il comporte un élément intercalaire (34) adapté pour être monté sur l'une des parties du boîtier (20) et la console (10) dans l'une ou l'autre des deux orientations possibles, une première structure à cliquets (46) sur l'élément intercalaire (34), une seconde structure à cliquets complémentaire (48) sur l'autre partie du boîtier (20) et la console (10), et des moyens élastiques (54, 56) pour pousser les première et seconde structures à cliquets (46, 48) à s'accoupler ; l'angle entre le boîtier (20) et la console (10), lorsque les structures à cliquets (46, 48) sont totalement accouplées, ayant une valeur lorsque l'élément intercalaire (34) est monté dans l'une des orientations et ayant une valeur différente lorsque l'élément intercalaire (34) est monté dans l'autre orientation.

2. Un rétroviseur extérieur selon la revendication 1, caractérisé en ce que la seconde structure à cliquets (48) est disposée sur un élément intercalaire supplémentaire (50) adapté de manière à pouvoir être monté de façon sélective sur l'autre partie du boîtier (20) et la console (10) dans l'une ou l'autre des deux orientations possibles de telle sorte que l'angle entre les boîtiers (20) et la console (10), lorsque les structures à cliquets (46, 48) sont totalement accouplées, présentent une première valeur lorsque l'élément intercalaire supplémentaire (50) est dans une orientation, et une seconde valeur lorsque l'élément intercalaire supplémentaire (50) est dans son autre orientation.

3. Un rétroviseur extérieur selon la revendication 1 ou 2, caractérisé en ce que, l'élément intercalaire (34) est monté sur la console (10) de manière à pouvoir être réglé par des moyens de réglage (38) pouvant être actionnés de l'intérieur du véhicule.

4. Un rétroviseur extérieur selon la revendication 1 ou 2, caractérisé en ce que l'élément intercalaire (34) est fixé rigidement sur la console (10).

FIG 1

0 171 906

FIG. 3

FIG. 2